# EUROPEAN PATENT APPLICATION

(11) **EP 1 595 801 A2**
(43) Date of publication of application: **16.11.2005**
(21) Application number: 05252816.3
(22) Date of filing: 07.05.2005
(51) Int. Cl.: B65D 3/22, B65D 3/28, B32B 1/08

(54) **Composite container having an electromagnetic surveillance device**

(30) Priority: 11.05.2004 US 842751; 02.05.2005 US 48829
(71) Applicant: Sonoco Development, Inc., Hartsville, South Carolina 29550 (US)
(72) Inventor: Nomula, Srinivas, Hartsville, South Carolina 29550 (US); Setty, Thomas J., Florence, South Carolina 29505 (US)
(74) Representative: Kinsler, Maureen Catherine

(57) **Abstract**

A composite container (10) having an electromagnetic surveillance device such as an EAS or RFID device (30) or the like, and an outer label (22) and/or inner liner that does not contain a metal foil layer. The label (22) in one embodiment comprises a lamination of a paper layer (32) and at least one polymer film layer (34a). The polymer film layer is either metallized with a vapor-deposited layer of metal, or has a metallic ink (34b) disposed thereon. The liner comprises a paper layer (40), a barrier-coated film (50) attached to the inner surface of the paper layer, and a sealant layer (44) disposed on an opposite side of the barrier-coated film (50) from the paper layer (40) and forming an innermost surface of the liner, the sealant layer comprising a heat seal material. The barrier-coated film (50) can comprise a metallized film, an aluminium oxide-coated film, a silicon oxide-coated film, or the like.

## Description

### BACKGROUND OF THE INVENTION

The present invention relates to composite containers, and more particularly relates to composite containers that incorporate an electronic article surveillance (EAS) or radio frequency identification (RFID) device. These EAS and RFID devices, and other devices operating on similar principles, are generically referred to herein as electromagnetic (EM) surveillance devices.

It is becoming increasingly common for the operators of retail establishments to attach EM surveillance devices to products to deter and detect shoplifting. A number of different types of EAS tags and detector systems have been developed and are in use. Generally, all EAS systems include a detection zone formed by a transmitter and a receiver. The transmitter and receiver are positioned at the exit of the retail establishment such that consumers must pass through the detection zone in order to exit the establishment. The transmitter sends a magnetic or radio frequency signal (which are generically referred to herein as electromagnetic signals) at one or more predetermined frequencies to the receiver. When an active EAS tag enters the detection zone, the tag creates a change or disturbance in the received signal, which is detected by the receiver.

One commonly used type of EAS system is the acousto-magnetic system, which utilizes a tag having a magnetostrictive metal strip that changes length in response to a changing magnetic field, and a bias magnet that biases the magnetic field so that it is never zero. The magnetostrictive metal strip is driven at its predetermined resonant frequency by a radio frequency signal generated by the transmitter at the resonant frequency (typically about 58 kHz), and in response to this driving magnetic field, the strip resonates at that frequency. The transmitter sends the RF signal in pulses, and the tag continues to resonate for a short time after the end of each pulse. The receiver detects the signals emitted by the tag in response to the RF pulses. A microcomputer in the receiver checks the tag signals to ensure they are at the correct frequency, are time-synchronized to the pulses, are at the proper level, and are at the correct repetition rate. If all these criteria are met, an alarm is sounded to alert store personnel that an article bearing a still-active EAS tag has passed in close proximity to the transmitter and receiver. The tag can be deactivated by demagnetizing the bias magnet incorporated into the tag.

Another type of EAS system is the electromagnetic system, which employs an adhesive label incorporating a wire or ribbon of metal that has a high magnetic permeability in proximity to a piece of semi-hard magnetic material. The transmitter emits a low-frequency (typically less than 1 kHz) electromagnetic field that causes the metal ribbon to become magnetically saturated twice each cycle, and the metal ribbon emits an electromagnetic signal as a result. Saturation occurs abruptly and causes distinctive patterns in the signal emitted by the label, which are detected by the receiver. The label can be deactivated by magnetizing the semi-hard magnetic material, which saturates the metal ribbon and puts it in an inactive state. The label can also be reactivated by magnetizing the semi-hard magnetic material.

The tags used in EAS systems as described above generally are not "smart" in the sense that the tags do not store information; the tags simply emit a characteristic electromagnetic signal in response to a specific driving electromagnetic field so that the presence of the tags in the detection zone can be detected. In contrast, radio frequency identification (RFID) systems employ "smart" tags that can store information and that can be remotely "read" by a reader to extract that information. Radio frequency identification systems can be used for the tracking of items through manufacturing, in inventory, in shipment, and the like. Generally, an RFID device comprises a tag that includes an integrated circuit (IC) chip microprocessor and a resonant circuit formed by a coiled antenna and a capacitor. In a passive RFID system, a reader generates a magnetic field at a predetermined frequency. When an RFID device, which usually can be categorized as being either read-only or read/write, enters the magnetic field, a small electric current forms in the device's resonant circuit. This circuit provides power to the device, which then modulates the magnetic field in order to transmit information that is pre-programmed on the device back to the reader at a predetermined frequency, such as 125kHz (low frequency) or 13.56MHz (high frequency). The reader then receives, demodulates, and decodes the signal transmission, and then sends the data on to a host computer associated with the system for further processing.

An active RFID system operates in much the same way, but in an active system the RFID device includes its own battery, allowing the device to transmit data and information at the touch of a button. For example, a remote control garage door opener typically uses an active RFID device that transmits a predetermined code to the receiver in order to raise and lower the garage door at the user's discretion.

Another technology that is related to RFID is known as Bistatix, which operates much the same way as RFID devices except that the coiled antenna and capacitor of the RFID device are replaced by a printed, carbon-based material. As a result, a Bistatix device is extremely flat and relatively flexible, although currently these types of devices are limited to a frequency range of about 125KHz. In addition, the read range of a Bistatix device is dependent on size, and for long read ranges a very large device may be required.

In the present application, the term "EM surveillance device" is used to encompass all of the above-described technologies.

It would be desirable to incorporate an EM surveillance device in a composite container. Conventional composite containers having high-barrier liners have employed foil-based liners. Foil is laminated to a paper or film layer on one side, and a sealant film or layer is laminated to or extrusion-coated onto the other side of the foil. However, at least some types of EM surveillance devices cannot be used with composite containers having foil-based liners because the metal foil interferes with the EM surveillance device. Accordingly, non-foil liners composed entirely of polymer materials have been contemplated, as described in the aforementioned U.S. Patent Application No. 10/842,751.

Composite containers generally include an outer label that covers the paperboard body of the container, for improving the aesthetics of the container. The label is usually printed with graphics and text. The label can also be functional. For instance, in some composite containers, an inner label based on a metal foil is used between the outermost label and the paperboard body of the container, primarily to protect the paperboard from moisture. Typically the inner label has a structure such as {ᵢₙ kraft / adhesive / foil/lacquer ₒᵤₜ} ("in" signifying the side facing toward the paperboard body and "out" signifying the opposite side). The kraft layer is bonded to the paperboard body wall and the foil faces out toward the outermost printed label. In other cases, there are no separate inner and outer labels, but instead a single label having a structure such as {ᵢₙ kraft / adhesive / foil / ink / lacquer ₒᵤₜ} is used.

These foil-based liners and/or labels can interfere with the operation of EM surveillance devices. It would be desirable to provide a non-foil-based liner and/or a non-foil-based label for a composite container having an EM surveillance device. The liner and/or label should provide aesthetics and functionality equivalent to conventional foil-based liners and labels.

### BRIEF SUMMARY OF THE INVENTION

The present invention in a first aspect addresses the above needs and achieves other advantages, by providing a non-foil-based label for a composite container that is compatible with the use of EM surveillance devices in the container and that has a metallic appearance similar to foil-based labels. In one embodiment of the invention, a label for a composite container has the structure {ᵢₙ paper / tie / metallic ink / ink / film ₒᵤₜ}. The paper layer is adhesive- or extrusion-laminated to the film (generically designated by the "tie" layer), which is pre-printed with the metallic ink on the inward-facing surface of the film. The film is generally transparent such that the ink is visible from the outside of the container. In another embodiment, the label comprises the metallic ink-covered film alone, without the paper layer. The metallic ink gives the composite container an appearance similar to a container having a foil-based label.

In another embodiment, a separate inner label has the structure {ᵢₙ paper /tie / metallic ink / film ₒᵤₜ}. A separate paper outer label is used in conjunction with this inner label.

If a high moisture barrier is required from the label, structures based on metallized film can be used. For instance, an inner label in accordance with the invention can have the structure {ᵢₙ kraft / tie / metal layer / film ₒᵤₜ}. The metal layer is a vapor-deposited layer of substantially pure metal such as aluminum. The surface of the film that is metallized can be coated with a metallization-promoting material prior to metallization to improve the uniformity and continuity of the metal layer, thereby enhancing the barrier performance. The metallization-promoting material can comprise an acrylate, polyvinyl alcohol, ethylene vinyl alcohol, polyester copolymer (e.g., PET copolymer), or the like. Alternatively or additionally, the surface of the film can be plasma-treated prior to metallization to enhance the barrier performance. In further embodiments of the invention, the metal layer of the metallized film can have a protective coating applied over it. The protective coating can comprise a lacquer (e.g., nitrocellulose, acrylic, etc.) or a vacuum acrylate coating.

In another embodiment of the invention, a surface-printed label has the structure {ᵢₙ kraft / tie / metal layer / film / ink / lacquer ₒᵤₜ}.

In yet another embodiment, an in-line laminated label has the structure {ᵢₙ kraft / tie / metal layer / film / tie / ink / film ₒᵤₜ}.

In a further embodiment, the label comprises the metallized film alone, without the paper layer.

The present invention in accordance with a second aspect addresses the above needs and achieves other advantages, by providing a high-barrier liner for a composite container that is compatible with the use of EM surveillance devices in the container. The high-barrier liner includes a paper layer having an outer surface for attachment to an inner paperboard surface of a body wall of a composite container and having an opposite inner surface, and a barrier-coated film attached to the inner surface of the paper layer, the barrier-coated film comprising a polymer film substrate having a vapor-deposited layer of barrier material applied to one surface of the substrate. The barrier-coated film can comprise a metallized film, an aluminum oxide-coated film, a silicon oxide-coated film, or the like. The liner also includes a sealant layer disposed on an opposite side of the barrier-coated film from the paper layer and forming an innermost surface of the liner, the sealant layer comprising a heat seal material.

In one embodiment of the invention, the barrier-coated film comprises a metallized film in which the barrier coating is a metal such as aluminum. The metallized film includes a metallization-promoting material coated onto the substrate prior to metallization to improve the uniformity and continuity of the metal layer, thereby enhancing the barrier performance. The metallization-promoting material can comprise an acrylate, polyvinyl alcohol, ethylene vinyl alcohol, polyester copolymer (e.g., PET copolymer), or the like. Alternatively or additionally, the surface of the substrate can be plasma-treated prior to metallization to enhance the barrier performance.

In further embodiments of the invention, the metal layer of the metallized film can have a protective coating applied over it. The protective coating can comprise a lacquer (e.g., nitrocellulose, acrylic, etc.) or a vacuum acrylate coating.

Further enhancement of the barrier performance is provided in other embodiments by including multiple metal layers and protective coating layers. For instance, the metallized film can have a first metal layer applied to the substrate and then covered by a first protective coating, a second metal layer applied over the first protective coating, and a second protective coating applied over the second metal layer.

Barrier performance can also be enhanced by the inclusion of an additional barrier web in the liner. The additional barrier web can comprise a metallized film, an aluminum oxide-coated film, a silicon oxide-coated film, or a highly oriented film.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a perspective view of a container in accordance with one embodiment of the invention;
FIG. 2 is a cross-sectional view through the container body along line 2-2 in FIG. 1;
FIG. 3 is a schematic cross-sectional view through a label in accordance with one embodiment of the invention;
FIG. 4 is a schematic cross-sectional view through a label in accordance with a second embodiment of the invention;
FIG. 5 is a schematic cross-sectional view through a label in accordance with a third embodiment of the invention;
FIG. 6 is a schematic cross-sectional view through a label in accordance with a fourth embodiment of the invention;
FIG. 7 is a schematic cross-sectional view through a liner of a container in accordance with another embodiment of the invention;
FIG. 8 is a cross-sectional view of a liner in accordance with another embodiment of the invention;
FIG. 9 is a cross-sectional view of a liner in accordance with a further embodiment of the invention;
FIG. 10 is a cross-sectional view of a liner in accordance with still another embodiment of the invention; and
FIG. 11 is a cross-sectional view of a liner in accordance with yet another embodiment of the invention.

### DETAILED DESCRIPTION OF THE INVENTION

The present inventions now will be described more fully hereinafter with reference to the accompanying drawings, in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

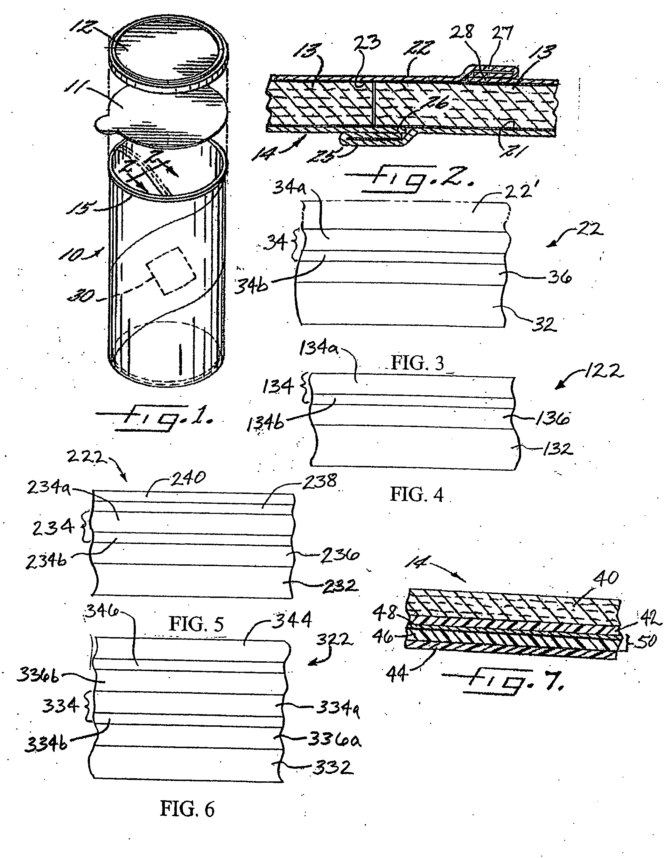

With reference to FIGS. 1 and 2, there is shown a composite container **10** having a non-foil-based label in accordance with one embodiment of the present invention. Although illustrated as having a circular cross-section, the tubular container **10** may have any cross-sectional shape that can be formed by wrapping the composite materials around an appropriately shaped mandrel. For example, the tube can be formed in a rectangular shape with rounded corners by convolutely wrapping the materials around a suitably shaped mandrel. The embodiment illustrated in FIG. 1 is particularly advantageous for packaging potato crisps or chips and includes a flexible membrane lid **11** and a reusable plastic end cap **12** over the membrane lid. Various other end closures may be used, however, depending upon the type of product that is to be packaged. For example, where dough is to be packaged, the end caps are typically constructed of metal and are crimp-sealed onto the ends of the container.

The tubular container **10** includes a wall having one or more body plies **13** (FIG. 2) preferably formed of paperboard and a liner ply **14** adhered to the inner surface of the body ply or plies **13.** The upper end of the tubular container **10** is rolled over so as to form a bead **15** or flange and the membrane lid **11** is hermetically sealed to the top of the bead. The end cap **12** is then snapped over the bead **15** and may be reused after the membrane lid **11** has been removed. A metal closure (not illustrated) can be secured to the opposite end of the container **10.** Alternative closure systems can be used at the container ends. For instance, the top closure can employ a metal ring in conjunction with a membrane lid sealed to the ring. Surprisingly, it has been found that the ring does not interfere with an EM surveillance device in the container, provided that the EM surveillance device is positioned some distance, typically at least about 3/8", from the metal.

The seams where the various plies are joined together are illustrated in FIG. 2. In some types of containers such as self-opening containers (e.g., for refrigerated dough), a single body ply is used and the edges of the ply are first skived and then joined together during the tube-forming process with an adhesive to create a strong seam. In other types of containers, a single or multiple body plies may be used and the edges of the ply or plies are not skived and form a butt joint as shown in FIG. 2, or form an overlap joint. In any event, the liner ply **14** is adhered to the inner surface of the body ply or plies **13** with a wet adhesive **21** and the overlapping edges of the liner ply are sealed together to ensure that the container **10** is completely sealed. A label ply **22** is adhered to the outer surface of the body ply **13** with an adhesive **23,** and can have various graphics and/or indicia printed thereon regarding the product within the container.

The liner ply **14** includes a fold seal formed by overlapping a folded first edge portion **25** of the liner with an opposite second edge portion **26** of the liner and sealing the overlapping edge portions together. Likewise, the label **22** includes a fold seal formed by overlapping a folded first edge portion **27** with an opposite second edge portion **28** of the label and sealing the edge portions together. Alternatively, the label can be seamed with a simple lap seal in which the first edge portion **27** is not folded. However, as further described below, because the label includes a paper layer, it is preferred to use the fold seal so that there is no exposed edge of the paper layer that could possibly wick moisture to the paperboard body plies **13** of the container.

The container **10** can incorporate an EM surveillance device **30.** The EM surveillance device can be attached to an outer surface of the label **22,** disposed between the label and the body ply or plies **13,** disposed between two body plies, or located elsewhere in the container. The location of the EM surveillance device is not of particular importance to the present invention, except to the extent that if a metal component (e.g., an end ring) is included, the EM surveillance device advantageously should be located some distance from the metal component as previously noted.

One of the considerations that must be taken into account because of the incorporation of the EM surveillance device **30** is that the presence of metal in the vicinity of the device can interfere with the proper operation of the device. Therefore, the inclusion of the EM surveillance device in many instances rules out the possibility of using a metal foil-based liner **14** or metal foil-based label **22.** The present invention in a first aspect provides alternative label structures capable of being used with EM surveillance devices and also capable of achieving the desired appearance and functionality of conventional foil-based labels.

FIG. 3 shows a label **22** in accordance with a first embodiment of the invention. The label comprises a laminate of an inner layer **32** of paper such as kraft, and an outer layer **34.** The outer layer comprises a generally transparent polymer film layer **34a** and a layer of metallic ink **34b** applied to the inwardly facing surface of the film layer **34a.** The outer layer **34** is either adhesively laminated to the inner paper layer **32** via an adhesive layer, or is extrusion-laminated to the inner paper layer via an extrusion layer of polymer. The layer **36** in FIG. 3 represents either the adhesive layer or the extrusion layer, and is generically referred to herein as a tie layer. The polymer film **34a** of the outer layer can comprise various materials, including but not limited to polyethylene, polypropylene, polyester, nylon, and the like.

The metallic ink **34b** can comprise any suitable metallic ink that is compatible with the film layer **34a.** Metallic inks generally comprise a metallic pigment and a liquid resin system or "varnish" that serves as a carrier for the pigment and protects it after drying. In metallic inks with a gold appearance, the pigment is made of a mixture of copper and zinc in various proportions. Silver ink pigments typically comprise aluminum particles in various proportions. The metallic pigment essentially consists of flakes or particles of metal from about 3 microns to about 25 microns in size, and preferably about 10-15 microns. Generally, the larger the particle size, the more reflectance or brilliance the printed ink film will display. However, for high-resolution graphics, smaller particle sizes are preferred. The metallic inks useful in the present invention can be either "leafing" or "non-leafing" inks, although the latter type is preferred. In a leafing ink, the metallic particles are coated with a fatty acid during processing, which causes the particles to rise to the surface of the printed ink film and orient themselves into a flat and reflective surface. The disadvantage of leafing inks is that the metallic flakes tend to rub off. In a non-leafing ink, the metallic particles tend to sink to the bottom of the ink film adjacent the substrate and thus are not susceptible to rubbing off, but the downside is that the ink has less brilliance because the particles tend not to align into a flat surface and because light has to penetrate the varnish before reflecting from the particles.

The label **22** is wrapped about the outer surface of the container body with the paper layer **32** adjacent the paperboard body ply **13.** A suitable adhesive **23,** which can comprise a wet adhesive such as dextrine or the like, is applied to the paper layer **32** prior to wrapping the label about the container body. Because the film layer **34a** is transparent, the metallic ink **34b** is visible from outside the container. In one embodiment, the metallic ink uniformly covers the entire surface of the polymer film layer **34a** such that the label has an appearance similar to that of a metal foil-paper laminate, and gives the container a desirable metallic appearance similar to that achievable with foil-based labels. Advantageously, the amount of metal present in the metallic ink layer **34b** is not so great as to interfere with the operation of the EM surveillance device **30** in the container.

As noted, the label **22** can be seamed with a fold seal or lap seal. When the film layer **34a** comprises a heat-sealable film, it is advantageous to use a fold seal such that the film layer on the folded edge portion **27** is against the unfolded edge portion **28;** heat is applied to the overlapping edge portions to heat-seal them together. Alternatively, a lap seal can be formed wherein the adhesive **23** adheres the overlying edge to the opposite underlying edge.

While the label **22** can be used as the sole label for the container, it is also within the scope of the invention to employ the label **22** as an inner label, in conjunction with another outer label **22'** of paper, shown in phantom lines in FIG. 3. The outer label **22'** is adhesively attached to the inner label **22** by a suitable adhesive. In this case, the inner label **22** serves primarily as a moisture barrier to protect the paperboard body plies **13** of the container from exterior moisture. The inner label also helps provide an appearance to the container more like a metal can, which is desirable in some cases.

FIG. 4 illustrates a label **122** in accordance with another embodiment of the invention, particularly for applications in which a greater degree of barrier performance is required of the label. For some types of products or containers, it may be desirable for the label to have substantial barrier performance against the transmission of water vapor. In these cases, a label based on metallized film is employed. Thus, the label **122** comprises a laminate of an inner layer **132** of paper such as kraft, and an outer layer **134.** The outer layer comprises a generally transparent polymer film layer **134a** and a vapor-deposited layer of metal **134b** on the inwardly facing surface of the film layer **134a.** The outer layer **134** is either adhesively laminated to the inner paper layer **132** via an adhesive layer, or is extrusion-laminated to the inner paper layer via an extrusion layer of polymer. The layer **136** in FIG. 4 represents either the adhesive layer or the extrusion layer, and is generically referred to herein as a tie layer. The polymer film **134a** of the outer layer can comprise various materials, including but not limited to polyethylene, polypropylene, polyester, nylon, and the like. The metal layer **134b** is a substantially pure metal such as aluminum, deposited on the film by any suitable metallization process, generally entailing vapor deposition of the metal. The amount of metal in the metal layer is not so great as to interfere with the operation of the EM surveillance device in the container.

If desired, the uniformity and continuity of the metal layer **134b** can be improved, thereby enhancing the barrier performance of the label, by applying a metallization-promoting material to the film **134a** prior to metallization. The material can comprise an acrylate, polyvinyl alcohol, ethylene vinyl alcohol, polyester copolymer (e.g., PET copolymer), or the like. Alternatively or additionally, the surface of the film can be plasma-treated prior to metallization to enhance the barrier performance. It may also be desirable in some cases to protect the metal layer **134b** prior to lamination of the outer layer **134** to the inner layer **132** by coating the metal layer with a protective coating of a lacquer (e.g., nitrocellulose, acrylic, etc.) or a vacuum acrylate coating.

A further embodiment of the invention is depicted in FIG. 5. The label **222** shown in FIG. 5 is a surface-printed label based on a metallized film. The label includes an inner layer **232** and a metallized film layer **234** adhesive- or extrusion-laminated together via an adhesive or extrusion tie layer **236,** as in the embodiment of FIG. 4. The metallized film layer includes a polymer film layer **234a** and a metal layer **234b** substantially as described above. The outer surface of the film layer **234a** is printed with ink **238,** and a layer **240** of lacquer or vacuum acrylate coating is applied over the ink to protect it.

The labels described thus far comprise laminations of two webs each of which can be prepared in advance of lamination and can be supplied in the form of a roll of the web. Thus, for example, to prepare the label **22,** a roll of paper **32** and a roll of pre-printed polymer film **34** having the metallic ink already applied thereto can be supplied to a laminator and can be laminated together by adhesive- or extrusion-lamination. The resulting laminate can be wound into rolls (typically after first being slit into suitable widths for use as labels) for subsequent use in the container-making process. Similarly, the label **122** can be prepared from a roll of paper **132** and a roll of metallized film **134.** The label **222** can likewise be prepared from a roll of paper **232** and a roll of metallized film **234.** The metallized film **234** can be pre-printed with the ink **238** and the protective coating **240** can be applied prior to lamination, or alternatively the resulting laminate can subsequently be printed with the ink and then coated with the protective coating.

The invention is not limited to two-web laminations. For example, FIG. 6 depicts a label **322** in accordance with another embodiment of the invention, comprising a three-web lamination. The label comprises an inner paper layer **332,** a metallized film layer **334,** and an outer film layer **344.** An adhesive or extrusion tie layer **336a** joins the paper layer to the metallized film layer, and another adhesive or extrusion tie layer **336b** joins the opposite side of the metallized film layer to the outer film layer. The metallized film layer includes a polymer film layer **334a** and a metal layer **334b.** The outer film layer **344** is reverse-printed with a layer of ink **346.**

As noted, the inclusion of the EM surveillance device generally rules out the possibility of using a metal foil-based liner **14**. Accordingly, the present invention in a second aspect provides alternative liner structures capable of being used with EM surveillance devices and also capable of achieving the levels of high-barrier performance that certain types of products require. For instance, some products require a liner having a water vapor transmission rate (WVTR) of less than 0.1 g/100 in²/day, or even less than 0.01 g/100 in²/day, and/or an oxygen transmission rate (OTR) of less than 0.1 cc/100 in²/day, or even less than 0.01 cc/100 in²/day. Such high levels of barrier performance generally have not been attainable with liners formed entirely of polymer materials.

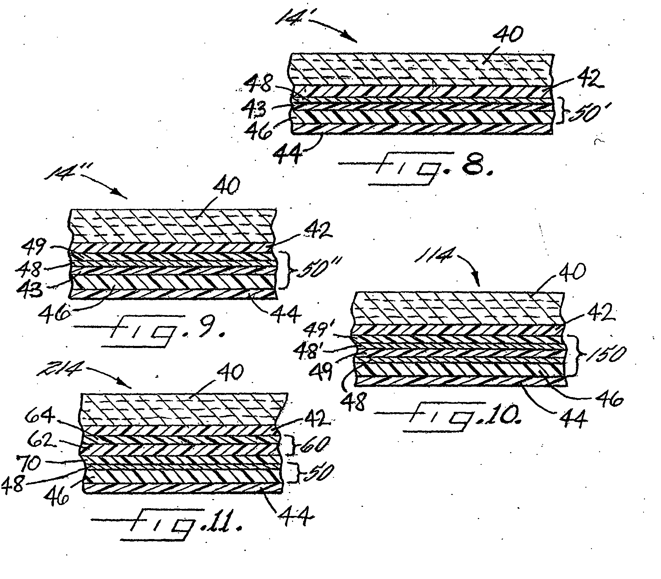

A liner structure in accordance with a first embodiment of the invention is schematically depicted in FIG. 7. The liner **14** is free of any metal foil layers. The liner includes a backing layer **40** of paper such as inextensible kraft or the like. The paper layer **40** is adhesive-laminated or extrusion-laminated to a barrier-coated film **50**; thus, layer **42** represents a layer of adhesive in the case of adhesive-lamination, or an extruded polymer layer in the case of extrusion-lamination. The liner also includes a sealant layer **44** disposed on the opposite surface of the barrier-coated film **50** from the paper layer **40.** The sealant layer **44** comprises a heat seal material. Various heat seal materials may be used, including but not limited to ionomer resins (e.g., SURLYN®, an ethylene acid copolymer with acid groups partially neutralized with zinc or sodium ions), high-density polyethylene (HDPE), low-density polyethylene (LDPE), coextruded film structures (e.g., ionomer/HDPE coex, LDPE/HDPE coex, etc.). The particular sealant material is not of importance to the present invention.

The barrier-coated film **50** comprises the primary barrier layer of the liner. The barrier-coated film in this embodiment comprises a film core layer **46** and a metal layer **48.** The metal layer **48** is vacuum- or vapor-deposited on the surface of the film core layer **46,** which serves as the substrate for the metal layer. Various metals can be used, but aluminum is most commonly employed. Processes for metallizing film are well known and are not further described herein. The film core layer **46** can comprise various polymers, including but not limited to polyethylene, polypropylene, polyester such as polyethylene terephthalate, nylon, and the like. Alternatively, the barrier-coated film **50** can comprise a film core layer having a vapor-deposited layer of a metallic compound (e.g., aluminum oxide or the like) or a non-metallic compound (e.g., silicon oxide or the like).

The liner structure of FIG. 7 is suitable for use in the container **10** having the EM surveillance device **30** because the amount of metal in the metal layer **48** is quite small. Indeed, the thickness of the metal layer of a metallized film is so small that typically it is not measured in physical dimensions but rather in terms of the surface-resistivity of the resulting metallized film (e.g., in ohms per square). Nevertheless, it has been estimated that the metal layer typically has a thickness on the order of a few hundred Angstroms. If an average thickness of 300 Angstroms is assumed, it can be calculated that for a container liner having a total surface area of about 0.1 m², the total mass is about 0.0081 g. Thus, it is apparent that the total amount of metal that would be in the vicinity of an EM surveillance device is exceedingly small, and hence does not interfere with the device.

The liner structure of FIG. 7 can achieve reasonably good barrier performance, but may not be sufficient for some types of products requiring extremely high-barrier performance. FIG. 8 shows an alternative liner structure that offers enhanced barrier potential. The liner **14'** is generally similar to that of FIG. 7, including a paper layer **40** adhesive- or extrusion-laminated by an intermediate adhesive or extrusion layer **42** to a metallized film **50'** and having a sealant layer **44.** However, the metallized film **50'** includes a coating **43** on the film core layer **46** for promoting the uniform and continuous metallization of the film core layer. The metallization-promoting coating **43** can comprise an acrylate, polyvinyl alcohol, ethylene vinyl alcohol, polyester copolymer (e.g., PET copolymer), or the like. Alternatively, the surface of the film core layer can be plasma-treated prior to metallization to enhance the uniformity and continuity of the metal layer **48.** The coating **43** or plasma treatment thus enhance the barrier performance of the metallized film, since discontinuities in the metal layer have deleterious effects on barrier performance.

With respect to discontinuities in the metal layer **48,** although some of them can result from the metallization process itself, in other cases they can be introduced subsequent to metallization such as by inadvertently scratching the metal layer during handling of the film. To reduce the incidence of such breaches in the metal layer, it is advantageous for the metallized film to include a protective coating over the metal layer. FIG. 9 shows a liner **14"** having such a metallized film. The liner **14"** includes a paper layer **40** adhesive- or extrusion-laminated by an intermediate adhesive or extrusion layer **42** to a metallized film **50"** and having a sealant layer **44.** The metallized film **50"** includes a coating **43** on the film core layer **46** for promoting the uniform and continuous metallization of the film core layer, and also includes a protective coating **49** applied over the metal layer **48** of the metallized film. The protective coating can comprise various materials including but not limited to a lacquer (e.g., nitrocellulose, acrylic, etc.) or a vacuum acrylate coating.

Still further enhancement of the barrier performance can be achieved in accordance with further embodiments of the invention. For example, FIG. 10 illustrates a liner **114** comprising a paper layer **40** adhesive- or extrusion-laminated by an intermediate adhesive or extrusion layer **42** to a metallized film **150** and having a sealant layer **44.** The metallized film **150** comprises a film core layer **46,** a first metal layer **48** applied to the surface of the film core layer, a first protective coating **49** applied over the first metal layer **48,** a second metal layer **48'** applied over the first protective coating **49,** and a second protective coating **49'** applied over the second metal layer **48'.**

Liners in accordance with the invention can also include an additional barrier layer when extremely high barrier performance is needed. An example is shown in FIG. 11. The liner **214** of FIG. 11 comprises a paper layer **40** adhesive- or extrusion-laminated by an intermediate adhesive or extrusion layer **42** to a barrier web **60,** which in turn is adhesive- or extrusion-laminated by an intermediate adhesive or extrusion layer **70** to a metallized film **50.** A sealant layer **44** is disposed on the opposite side of the metallized film from the barrier web **60.** The metallized film **50** comprises a film core layer **46** and a metal layer **48** as previously described. The barrier web **60** includes a film layer **62** and a barrier coating **64.** The film layer **62** can comprise various polymers such as polyethylene, polypropylene, polyester such as polyethylene terephthalate, nylon, and the like. The film layer **62** can be highly oriented. The barrier coating **64** can comprise various materials such as aluminum oxide, silicon oxide, and the like. Alternatively, the barrier coating **64** can comprise a vapor-deposited metal layer such that the barrier web **60** comprises a metallized film.

Many modifications and other embodiments of the inventions set forth herein will come to mind to one skilled in the art to which these inventions pertain having the benefit of the teachings presented in the foregoing descriptions and the associated drawings. For example, as noted, the label can omit the paper layer and can consist essentially of a polymer film having a vapor-deposited metal layer or a layer of metallic ink substantially covering an entire surface of the film. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A container, comprising:
a tubular body wall comprising from one to a plurality of paperboard body plies wrapped about an axis into a tubular shape and adhered together, the body wall having an inner surface and an outer surface; and
a label wrapped about and adhered to the outer surface of the body wall, the label comprising a paper layer laminated to a generally transparent polymer film layer, the paper layer being disposed between the body wall and the polymer film layer, the polymer film layer having an inwardly facing surface that faces the paper layer, the label having a layer comprising one of a metallic ink and a vapor-deposited coating of metal disposed on the inwardly facing surface of the polymer film layer.

2. The container of claim 1, further comprising an electromagnetic surveillance device incorporated into the container.

3. The container of claim 1, further comprising a liner adhered to the inner paperboard surface of the body wall, the liner comprising:
a paper layer having an outer surface facing the inner surface of the body wall and having an inner surface facing toward the interior of the container;
a barrier-coated film attached to the inner surface of the paper layer, the barrier-coated film comprising a polymer film substrate having a vapor-deposited layer of barrier material applied to one surface of the substrate; and
a sealant layer disposed on an opposite side of the barrier-coated film from the paper layer and forming an innermost surface of the liner, the sealant layer comprising a heat seal material.

4. The container of claim 3, wherein the barrier-coated film of the liner comprises a metallized film.

5. The container of claim 1, wherein the layer disposed on the inwardly facing surface of the polymer film layer of the label comprises a vapor-deposited coating of metal, and wherein the label includes a layer of ink disposed on an outwardly facing surface of the polymer film layer.

6. The container of claim 5, wherein the label further comprises a protective layer covering the layer of ink.

7. The container of claim 1, wherein the layer disposed on the inwardly facing surface of the polymer film layer comprises a vapor-deposited coating of metal, and wherein the label further comprises a reverse-printed polymer film layer laminated to an outwardly facing surface of the polymer film layer having the vapor-deposited coating of metal.

8. A label for a composite container, the label comprising:
a generally transparent first polymer film layer having first and second sides;
a layer comprising one of metallic ink and a vapor-deposited layer of metal on the first side of the first polymer film layer; and
a paper layer laminated to the first polymer film layer such that the layer of metallic ink or vapor-deposited metal is disposed between the first polymer film layer and the paper layer.

9. The label of claim 8, further comprising:
an outermost transparent layer joined to the second side of the first polymer film layer; and
an ink layer disposed between the outermost transparent layer and the first polymer film layer;
the paper layer forming one surface of the label for adhesion to an outer surface of a composite container body, and the outermost transparent layer forming an opposite surface of the label.

10. The label of claim 9, wherein the outermost transparent layer comprises a second polymer film layer that is reverse-printed with the ink layer and is laminated to the first polymer film layer.

11. The label of claim 9, wherein the outermost transparent layer comprises one of a coating of lacquer and a vacuum acrylate coating, the ink layer being printed onto the second side of the first polymer film layer.

12. A composite container, comprising:
a tubular body wall comprising paperboard material, the body wall defining an inner paperboard surface facing toward an interior of the container;
a liner adhered to the inner paperboard surface of the body wall, the liner comprising:
a paper layer having an outer surface facing the inner paperboard surface of the body wall and having an inner surface facing toward the interior of the container;
a barrier-coated film attached to the inner surface of the paper layer, the barrier-coated film comprising a polymer film substrate having a vapor-deposited layer of barrier material applied to one surface of the substrate; and
a sealant layer disposed on an opposite side of the barrier-coated film from the paper layer and forming an innermost surface of the liner, the sealant layer comprising a heat seal material; and
an electromagnetic surveillance device incorporated in the container.

13. The container of claim 12, wherein the barrier-coated film comprises a metallized film.

14. The container of claim 13, wherein the polymer film substrate of the metallized film comprises a film core having opposite first and second surfaces and a coating of a metallization-promoting material applied to the first surface of the film core, the metal layer of the metallized film being applied to the metallization-promoting material.

15. The composite container of claim 12, wherein the metallized film includes a protective coating over the metal layer.

16. The composite container of claim 12, wherein the metallized film comprises a first protective coating applied over the metal layer, a second metal layer applied over the first protective coating, and a second protective coating applied over the second metal layer.

17. The composite container of claim 12, wherein the liner further comprises one of a second metallized film, an aluminum oxide-coated film, a silicon oxide-coated film, and an oriented polymer film disposed between the paper layer and the sealant layer.

18. A high-barrier liner for a composite container, comprising:
a paper layer having an outer surface for attachment to an inner paperboard surface of a body wall of a composite container and having an opposite inner surface;
a barrier-coated film attached to the inner surface of the paper layer, the barrier-coated film comprising a polymer film substrate having a vapor-deposited layer of barrier material applied to one surface of the substrate; and
a sealant layer disposed on an opposite side of the barrier-coated film from the paper layer and forming an innermost surface of the liner, the sealant layer comprising a heat seal material.

19. The high-barrier liner of claim 18, wherein the barrier-coated film comprises a metallized film.

20. The high-barrier liner of claim 19, wherein the polymer film substrate of the metallized film comprises a film core having opposite first and second surfaces and a coating of a metallization-promoting material applied to the first surface of the film core, the metal layer of the metallized film being applied to the metallization-promoting material.

21. The high-barrier liner of claim 19, wherein the metallized film includes a protective coating over the metal layer.

22. The high-barrier liner of claim 19, wherein the metallized film comprises a first protective coating applied over the metal layer, a second metal layer applied over the first protective coating, and a second protective coating applied over the second metal layer.
